# EUROPEAN PATENT SPECIFICATION

(11) **EP 0 834 415 B1**
(45) Date of publication and mention of the grant of the patent: **08.03.2006**
(21) Application number: 97116992.5
(22) Date of filing: 30.09.1997
(51) Int. Cl.: B32B 27/08, B60K 15/03

(54) **Multilayer plastic container**
Mehrschichtiger Kunststoffbehälter
Container à plusieurs couches en matière plastique

(30) Priority: 03.10.1996 JP 26328296
(43) Date of publication of application: 08.04.1998
(73) Proprietor: Mitsui Chemicals, Inc., Tokyo (JP)
(72) Inventor: Shigemoto, Hiromi, Mitsui Chemicals, Inc., Ichihara-shi, Chiba 299-01 (JP); Kawachi, Hideshi, Mitsui Chemicals, Inc., Ichihara-shi, Chiba 299-01 (JP)
(74) Representative: Hansen, Bernd

(56) References cited:
- EP-A- 0 095 150
- EP-A- 0 461 836
- DE-A- 3 816 942
- FR-A- 2 534 523
- FR-A- 2 652 303
- US-A- 4 608 286
- DATABASE WPI Section Ch, Week 9716 Derwent Publications Ltd., London, GB; Class A17, AN 97-174334 XP002084337 & JP 09 039176 A (MITSUI PETROCHEM IND CO LTD), 10 February 1997
- DATABASE WPI Section Ch, Week 9404 Derwent Publications Ltd., London, GB; Class A17, AN 94-031441 XP002084338 & JP 05 338098 A (SHOWA DENKO KK) , 21 December 1993
- DATABASE WPI Section Ch, Week 8144 Derwent Publications Ltd., London, GB; Class A17, AN 81-80885D XP002084339 & JP 56 120345 A (SEKISUI CHEM IND CO LTD) , 21 September 1981
- DATABASE WPI Section Ch, Week 8406 Derwent Publications Ltd., London, GB; Class A17, AN 84-032800 XP002084340 & JP 58 220738 A (NISSAN MOTOR CO LTD) , 22 December 1983
- DATABASE WPI Section Ch, Week 7942 Derwent Publications Ltd., London, GB; Class A17, AN 79-75976B XP002084341 & JP 54 113678 A (MITSUBISHI CHEM IND LTD) , 5 September 1979

## Description

### Detailed Description of the Invention

This invention relates to a multilayer plastic container. More specifically, it relates to a multilayer plastic container which hardly undergoes reduction in adhesive strength between layers even when it comes into contact with gasoline or gasohol (a mixture of gasoline and alcohol), has excellent impact strength in drop and adhesion between layers, particularly adhesion between layers at high temperatures, and can be advantageously used as a gasoline tank for automobiles.

Heretofore, there has been known a multilayer laminate structure consisting of a polyethylene resin layer, an adhesive layer, a layer of saponification product of ethylene-vinyl acetate copolymer (may be abbreviated as EVOH hereinafter) and a layer of a mixture of a polyethylene resin, adhesive and saponification product of ethylene-vinyl acetate copolymer. It is also known that an ethylene polymer composition partly or wholly modified with an acid hydride is used as the adhesive layer of this multilayer laminate structure (see JP-A Sho 60-189429 (the term "JP-A" as used herein means an "unexamined published Japanese patent application")). However, the above conventionally known modified ethylene polymer composition is not always satisfactory in terms of adhesive strength between adhesive layers particularly when it contacts gasoline or gasohol. When the modified ethylene polymer has a low density, it swells by immersion in gasoline and exhibits a low adhesive strength at high temperatures frequently. On the other hand, when the modified ethylene polymer has a high density, its adhesive strength to EVOH lowers and it becomes unstable in some cases.

It is an object of the present invention to provide a novel multilayer plastic container.

It is another object of the present invention to provide a multilayer plastic container which retains sufficient adhesive strength even when it comes into contact with gasoline or gasohol, has excellent long-term durability and adhesive strength at high temperatures, and is suitable for use as a fuel tank for automobiles.

Other objects and advantages of the present invention will become apparent from the following description.

According to the present invention, the above objects and advantages of the present invention can be attained by a multilayer plastic container which is formed of a laminate comprising at least a layer (B) of a polyethylene resin, a layer (A) of a modified ethylene polymer composition and a layer (C) of a resin selected from the group consisting of saponification products of ethylene-vinyl acetate copolymer and polyamide resins in the mentioned order, the modified ethylene polymer composition of the layer (A) being graft modified with an unsaturated carboxylic acid or derivative thereof and having a melt flow rate (MFR), measured in accordance with ASTM D1238 (at 190°C under a load of 2,160 g), of 0.1 to 3.0 g/10 minutes, a density of 0.920 to 0.930 g/cm³ and an n-decane insoluble content of 2 to 40 % by weight at 90°C.

The multilayer plastic container of the present invention is formed of a laminate comprising at least a layer (B) of a polyethylene resin, a layer (A) of a modified ethylene polymer composition and a layer (C) of a saponification product of ethylene-vinyl acetate copolymer or a polyamide resin in the mentioned order.

One of the important features of the multilayer plastic container of the present invention is that the modified ethylene polymer composition of the layer (A) has a melt flow rate (MFR), measured in accordance with ASTM D1238 (at 190°C under a load of 2,160 g), of 0.1 to 3.0 g/10 minutes, a density, measured in accordance with ASTM D1505, of 0.920 to 0.930 g/cm³ and an n-decane insoluble content of 2 to 40 % by weight at 90°C.

The ethylene polymer in the present invention is a crystalline resin essentially consisting of ethylene units. The ethylene units are preferably contained in an amount of 70 to 100 mol%, particularly preferably 90 to 98 mol%.

A monomer other than ethylene constituting the ethylene polymer in the present invention is preferably α-olefin having 3 to 10 carbon atoms. Illustrative examples of the α-olefin include propylene, 1-butene, 1-pentene, 1-hexene, 1-octene, 1-decene, 4-methyl-l-pentene and the like. They may be used alone or in combination of two or more.

The ethylene polymer can be produced by a known method per se such as a high-pressure method or low-pressure method which uses a Ziegler type Ti-based catalyst, Co-based catalyst or metallocene-based catalyst.

The ethylene polymer composition used in the present invention is a composition comprising two or more of the above ethylene polymers.

The ethylene polymer composition used in the present invention is partly graft modified with a unsaturated carboxylic acid or derivative thereof.

Illustrative examples of the unsaturated carboxylic acid or derivative thereof include unsaturated carboxylic acids such as acrylic acid, maleic acid, fumaric acid, tetrahydrophthalic acid, itaconic acid, citraconic acid, crotonic acid, isocrotonic acid, Nadic acid (endocis-bicyclo[2.2.1]hepto-5-en-dicarboxylic acid); and their derivatives such as acid halides, amides, imides, anhydrides, esters, and the like. The derivatives include, for example, maleyl chloride, maleimide, maleic anhydride, citraconic anhydride, monomethyl maleate, dimethyl maleate, glycidyl maleate and the like. Of these, unsaturated dicarboxylic acids and acid anhydrides thereof are preferred, and maleic acid, Nadic acid and acid anhydrides thereof are particularly preferred.

The amount of the grafted unsaturated carboxylic acid or derivative thereof contained in the polymer composition is preferably 0.001 to 10 % by weight, more preferably 0.002 to 1 % by weight. When the content of the grafted unsaturated carboxylic acid or derivative thereof is too small, adhesion is insufficient, while when the content is too large, a crosslinking reaction is liable to occur, thereby making it difficult to have stable quality.

The modified ethylene polymer composition used in the present invention has a melt flow rate (MFR), measured in accordance with ASTM D1238 (at 190°C, under a load of 2,160 g), of 0.1 to 3.0 g/10 minutes, preferably 0.5 to 2.0 g/10 minutes. When MFR is too low or too high, moldability is liable to deteriorate.

The modified ethylene polymer composition used in the present invention has a density of 0.920 to 0.930 g/cm³, preferably 0.922 to 0.928 g/cm³. When the density is too low, mechanical strength is lost easily due to swelling by gasoline and an adhesive force between layers at a high temperature of 80°C or higher is liable to deteriorate. On the other hand, when the density is too high, adhesion force between layers becomes apt to be unstable.

Further, the modified ethylene polymer composition used in the present invention has an n-decane insoluble content of 2 to 40 % by weight, preferably 3 to 30 % by weight, particularly preferably 5 to 20 % by weight, at 90°C. When the n-decane insoluble content is too large, adhesive force is difficult to be stable, while when the n-decane insoluble content is too small, the amount of swelling by gasoline is large, mechanical strength is liable to decrease and adhesive strength at high temperatures is apt to deteriorate.

The amount of the n-decane insoluble content in the present invention is a value (% by weight) obtained by filtrating a component which precipitates when the temperature is lowered to 90°C after the modified ethylene polymer composition is completely dissolved in n-decane at 140°C. The filtration is carried out in a warm state of the component.

The modified ethylene polymer composition used in the present invention is a composition comprising a modified ethylene polymer (A1) and an unmodified ethylene polymer (A2).

The above modified ethylene polymer (A1) is obtained by graft modifying an ethylene polymer with an unsaturated carboxylic acid or derivative thereof. The modified ethylene polymer (A1) preferably has a density of 0.930 to 0.980 g/cm³, more preferably 0.940 to 0.970 g/cm³. When a modified ethylene polymer (A1) having a density within the above range is used, a composition having excellent heat resistant adhesion is easy to obtain.

Examples of the unsaturated carboxylic acid or derivative thereof to be graft polymerized to the modified ethylene polymer (A1) are the same as compounds exemplified for the modified ethylene polymer composition.

The graft rate of the unsaturated carboxylic acid or derivative thereof to the modified ethylene polymer (A1) is preferably 0.01 to 10 % by weight, more preferably 0.02 to 5 % by weight. When the graft rate is too low, adhesive force is insufficient, while when the graft rate is too high, a crosslinking reaction is liable to occur, thereby making it difficult to have stable quality.

The melt flow rate (MFR) of the modified ethylene resin (A1) graft modified with an unsaturated carboxylic acid or derivative thereof is preferably 0.01 to 3.0 g/10 minutes, more preferably 0.05 to 1.5 g/10 minutes. The melt flow rate was measured in accordance with ASTM D1238 (at 190°C under a load of 2,160 g). When the melt flow rate is lower than 0.01 g/10 minutes, ordinary extrusion molding is difficult to conduct and the pressure goes up and may exceed the limit pressure of a molding machine at the time of molding. On the other hand, when the melt flow rate is higher than 3 g/10 minutes, uniformity in thickness is liable to deteriorate, the molecular weight is apt to decrease, and impact strength in drop tends to become low.

The unmodified ethylene polymer (A2) has a density of 0.915 to 0.935 g/cm³. When the density is too low, mechanical strength is easily lost due to swelling by gasoline, while when the density is too high, it is difficult to develop adhesive force stably.

The MFR of the unmodified ethylene polymer (A2) is preferably 0.01 to 10 g/10 minutes, more preferably 0.10 to 5 g/10 minutes. When MFR is too high, moldability is liable to deteriorate. MFR is measured in accordance with ASTM D1238 (at 190°C under a load of 2,160 g).

The modified ethylene polymer composition used in the present invention, which has an n-decane insoluble content of 2 to 30 % by weight at 90°C, can be produced by mixing 2 to 30 % by weight of the above modified ethylene polymer (A1) and 70 to 98 % by weight of the above unmodified ethylene polymer (A2).

In this case, a composition comprising the modified ethylene polymer (A1) and the unmodified ethylene polymer (A2) can be prepared by a known method per se, for example, by kneading the polymers (A1) and (A2) in a molten state with an extruder, Banbury mixer or the like, or mixing under stirring the polymers (A1) and (A2) in the presence of a solvent.

The modified ethylene polymer composition used in the present invention can contain other polymer, rubber or various additives in limits not prejudicial to the object of the present invention.

The multilayer plastic container of the present invention has a layer (B) of a polyethylene resin.

The polyethylene resin used in the present invention is an ethylene homopolymer or a random copolymer of ethylene and α-olefin. The copolymer proportion rate of the α-olefin is 10 mol% or less, preferably 5 mol% or less.

The α-olefin is preferably α-olefin having 3 to 10 carbon atoms. Preferred examples of the α-olefin include propylene, 1-butene, 1-hexene, 4-methyl-1-pentene, 1-octene, 1-decene and the like.

The melt flow rate (MFR) of the polyethylene resin in the present invention is preferably 0.01 to 3.0 g/10 minutes, more preferably 0.05 to 1.5 g/10 minutes. The density of the polyethylene resin is preferably 0.940 to 0.980 g/cm³, more preferably 0.950 to 0.970 g/cm³.

When the melt flow rate is above the range, a large molded article formed of the resulting laminate has insufficient impact strength. Further, blow moldability of the resulting laminate deteriorates, thereby making it difficult to form a molded article of a large size by a blow molding. On the other hand, when the melt flow rate is below the above range, extrusion molding is apt to be difficult. When the density is below the above range, gasoline permeability deteriorates and the obtained multilayer plastic container is not suitable as a gasoline tank.

The polymer layer (C) of the multilayer plastic container of the present invention is formed of a saponification product of ethylene-vinyl acetate copolymer or a polyamide resin.

Preferably the saponification product of ethylene-vinyl acetate copolymer is a polymer having a saponification degree of 90 to 100 % obtained by saponifying an ethylene-vinyl acetate copolymer having an ethylene content of 15 to 70 mol%. A saponification product (ethylene-vinyl alcohol copolymer) having an ethylene content of less than 15 mol% has a melting point which is close to its decomposition temperature and hence, is difficult to be finely dispersed into an ethylene polymer. When the ethylene content is too large, barrier property deteriorates and the object of the present invention cannot be attained.

Preferred examples of the polyamide resin include nylon 6, nylon 66, nylon 610, nylon 12, nylon 11, MXD nylon, amorphous nylon, nylon copolymer and the like.

The multilayer plastic container of the present invention comprises a layer (B) of a polyethylene resin, a layer (A) of a modified ethylene polymer composition and a layer (C) of a saponification product of ethylene-vinyl acetate copolymer or polyamide resin in the mentioned order, as described above.

In the laminate constituting the multilayer plastic container of the present invention, a layer (D) can be further present between the layer (B) of a polyethylene resin and the layer (A) of a modified ethylene polymer composition.

The layer (D) is formed of a composition obtained by crushing unused portions or recycles (regrinds) of the laminate containing the layers (A), (B) and (C) and, as required, further melt kneading the crushed ones with an extruder or the like, and can be made present in limits not prejudicial to the object of the multilayer plastic container. The layer (D) does not need to be formed of the above reclaimed resin only and may be blended with a polyethylene resin used in the layer (B), for example, to improve mechanical properties.

The layers (A), (B), (C) and (D) constituting the multilayer laminate structure of the present invention may contain known additives such as a filler, stabilizer, lubricant, antistatic agent, flame retardant, foaming agent and the like in limits not prejudicial to the object of the present invention.

The layer structure of the multilayer plastic container of the present invention is a three-layer structure consisting of a polyethylene resin layer (B)/modified ethylene polymer composition layer (A)/layer (C) of saponification product of ethylene-vinyl acetate copolymer or a polyethylene resin layer (B)/modified ethylene polymer composition layer (A)/polyamide resin layer (C); a four-layer structure consisting of a polyethylene resin layer (B)/layer (D)/modified ethylene polymer composition layer (A)/layer (C) of saponification product of ethylene-vinyl acetate copolymer, a polyethylene resin layer (B)/layer (D)/modified ethylene polymer composition layer (A)/polyamide resin layer (C), a polyethylene resin layer (B)/modified ethylene polymer composition layer (A)/layer (C) of saponification product of ethylene-vinyl acetate copolymer/modified ethylene polymer composition layer (A) or a polyethylene resin layer (B)/modified ethylene polymer composition layer (A)/polyamide resin layer (C)/modified ethylene polymer composition layer (A); a five-layer structure consisting of a polyethylene resin layer (B)/layer (D)/modified ethylene polymer composition layer (A)/layer (C) of saponification product of ethylene-vinyl acetate copolymer/modified ethylene polymer composition layer (A), a polyethylene resin layer (B)/layer (D)/modified ethylene polymer composition layer (A)/polyamide resin layer (C)/modified ethylene polymer composition layer (A), a polyethylene resin layer (B)/modified ethylene polymer composition layer (A)/layer (C) of saponification product of ethylene-vinyl acetate copolymer/modified ethylene polymer composition layer (A)/polyethylene resin layer (B), or a polyethylene resin layer (B)/modified ethylene polymer composition layer (A)/polyamide resin layer (C)/modified ethylene polymer composition layer (A)/polyethylene resin layer (B); a six-layer structure consisting of a polyethylene resin layer (B)/layer (D)/modified ethylene polymer composition layer (A)/layer (C) of saponification product of ethylene-vinyl acetate copolymer/modified ethylene polymer composition layer (A)/polyethylene resin layer (B) or a polyethylene resin layer (B)/layer (D)/modified ethylene polymer composition layer (A)/polyamide resin layer (C)/modified ethylene polymer composition layer (A)/polyethylene resin layer (B); or a seven-layer structure consisting of a polyethylene resin layer (B)/layer (D)/modified ethylene polymer composition layer (A)/layer (C) of saponification product of ethylene-vinyl acetate copolymer/modified ethylene polymer composition layer (A)/layer (D)/polyethylene resin layer (B) or a polyethylene resin layer (B)/layer (D)/modified ethylene polymer composition layer (A)/polyamide resin layer (C)/modified ethylene polymer composition layer (A)/layer (D)/polyethylene resin layer (B).

The multilayer plastic container of the present invention can be produced by a known co-extrusion blow molding method which comprises melt-laminating resins for layers (A), (B) and (C), and as required, layer (D), using a plurality of extruders which can melt the respective resins, co-extruding them as a molten parison from tips of the respective extruders, surrounding it with a mold, injecting a pressurized fluid into the inside of the parison to mold it into a predetermined shape, cooling the parison to solidify it and taking out it from the mold.

Since the multilayer plastic container of the present invention is excellent in gasoline barrier property, has a high impact strength, and exhibits excellent adhesion between layers, durability and heat-resistant adhesion, it can be advantageously used as a fuel tank for automobiles.

The following examples are given to further illustrate the present invention. It is to be understood that the present invention is not limited to these examples without departing from the scope thereof.

### Example 1

Layer (B): A high-density polyethylene containing 99.8 mol% of a polymer unit derived from ethylene and having a density of 0.955 g/cm³ and a melt flow rate, measured at 190°C in accordance with ASTM D1238, of 0.03 g/10 minutes was extruded from an extruder at 230°C. to prepare pellets for the layer (B).

Layer (C): A saponification product of ethylene-vinyl acetate copolymer (trade name: EVA1 F101, manufactured by Kuraray Co. Ltd.) having an ethylene content of 32 mol% and a melt flow rate of 1.3 g/10 minutes was extruded from an extruder at 210°C. to prepare pellets for the layer (C).

Layer (D): A composition obtained by crushing burrs of a blow molding product consisting of layers (A), (B) and (C) with a crusher was extruded from an extruder at 230°C. to prepare pellets for the layer (D).

Layer (A): 30 % by weight of a modified ethylene·4-methyl-1-pentene copolymer (A1) (density of 0.948 g/cm³, melt flow rate, measured at 190°C in accordance with ASTM D1238, of 0.5 g/10 minutes) obtained by graft modifying an ethylene·4-methyl-1-pentene random copolymer consisting of 98.8 mol% of a polymer unit derived from ethylene and 1.2 mol% of 4-methyl-1-pentene as a comonomer and having a density of 0.950 g/cm³ with 0.9 % by weight of maleic anhydride was mixed with 70 % by weight of an ethylene·1-butene random copolymer (A2) consisting of 96.0 mol% of a polymer unit derived from ethylene and 4.0 mol% of 1-butene as a comonomer and having a density of 0.920 g/cm³ and a melt flow rate of 1.5 g/10 minutes with a Henschel mixer and then, the resulting mixture was melt-kneaded with an extruder and pelletized to obtain a modified ethylene·á-olefin copolymer composition as pellets.

The obtained modified ethylene·á-olefin copolymer composition had a density of 0.928 g/cm³ and a melt flow rate of 1.2 g/10 minutes.

After 8 g of the modified ethylene·á-olefin copolymer composition was weighed and completely dissolved in 500 ml of n-decane at 145°C, the temperature was lowered to 90°C at a rate of 25°C/hr. Further, the solution was kept at 90°C for 16 hours and filtrated with a funnel maintained at 90°C to separate out a precipitate. The precipitate was dried with a drying material at a reduced pressure in a nitrogen air current at 60°C for 24 hours and weighed. It was found that the n-decane insoluble content of the precipitate was 30 % by weight.

Using the pellets obtained above, the layers (B)/(A)/(C)/(A)/(D)/(B) were extruded as a parison from a co-extrusion blow die (die temperature of 230°C) in this order, the parison in a molten state was held in a mold, 5 kg/cm² compressed air was blown into the parison, and the resulting molding was taken out from the mold after cooling. Thus, a bottle having a layer thickness configuration of 1/0.2/0.2/0.2/0.8/1 mm, a diameter of 80 mm, a height of 200 mm and a capacity of 500 ml was obtained.

A 15 mm-wide sample piece was cut out from the side surface of the bottle to measure adhesive force between the adhesive resin layer (A) and layer (C) of the saponification product of ethylene-vinyl acetate copolymer in a thermostatic chamber at 60°C, 80°C and 100°C. A peel test measurement method is a T-peel method at a peel rate of 50 mm/min. The measurement result of adhesive force is shown in Table 1.

### Example 2

A modified ethylene polymer (A1) (MFR of 0.9 g/10 minutes) having properties shown in Table 1 and prepared by graft modifying an ethylene·1-butene copolymer comprising 0.3 mol% of a polymer unit derived from 1-butene and having a density of 0.965 g/cm³ with 0.9 % by weight of maleic anhydride was used in place of the modified ethylene·4-methyl-1-pentene copolymer (A1) in Example 1. A modified ethylene polymer composition was obtained by melt-mixing 15 % by weight of this modified ethylene polymer (A1) and 85 % by weight of the same unmodified ethylene·1-butene random copolymer (A2) (a polymer consisting of 96.0 mol% of a polymer unit derived from ethylene and 4.0 mol% of 1-butene as a comonomer and having a density of 0.920 g/cm³ and a melt flow rate of 1.5 g/10 minutes) as used in Example 1. The modified ethylene polymer composition had an n-decane insoluble content of 16 % by weight.

A multilayer plastic container was obtained using this modified ethylene polymer composition in the same manner as in Example 1. Table 1 shows the measurement result of adhesive force between the adhesive resin layer (A) and the ethylene·vinyl acetate copolymer saponified product layer (C) of this multilayer plastic container.

### Example 3

A modified ethylene·4-methyl-1-pentene copolymer (A1) (MFR of 0.7 g/10 minutes) prepared by graft modifying an ethylene·4-methyl-1-pentene copolymer consisting of 99.0 mol% of a polymer unit derived from ethylene and 1.0 mol% of 4-methyl-l-pentene as a comonomer and having a density of 0.945 g/cm³ with 0.9 % by weight of maleic anhydride was used in place of the modified ethylene·4-methyl-1-pentene copolymer (A1) in Example 1. A modified ethylene polymer composition was obtained by melt kneading 25 % by weight of this modified ethylene·4-methyl-l-pentene copolymer (A1) and 75 % by weight of the same ethylene·1-butene random copolymer (A2) as used in Example 1. The modified ethylene polymer composition had an MFR of 1.2 g/10 minutes, a density of 0.925 g/cm³ and an n-decane insoluble content of 26 % by weight.

A multilayer plastic container was obtained using this modified ethylene polymer composition in the same manner as in Example 1. The measurement result of adhesive force between the adhesive resin layer (A) and the layer (C) of saponification product of ethylene·vinyl acetate copolymer of this multilayer plastic container is shown in Table 1.

### Comparative Example 1

A multilayer plastic container was obtained in the same manner as in Example 1 except that a modified ethylene·4-methyl-1-pentene copolymer (MFR of 0.5 g/10 minutes) prepared by graft modifying an ethylene·4-methyl-1-pentene copolymer having a density of 0.915 g/cm³ with 0.9 % by weight of maleic anhydride was used in place of the modified ethylene·4-methyl-1-pentene polymer (A1) in Example 1.

The measurement results of the properties of the obtained modified ethylene polymer composition and adhesive force between the adhesive resin layer (A) and the layer (C) of saponification product of ethylene·vinyl acetate copolymer of the multilayer plastic container are shown in Table 1.

### Comparative Example 2

The procedure of Example 1 was repeated except that a modified ethylene polymer (A1) having properties shown in Table 1 and prepared by graft modifying an ethylene·1-butene copolymer having a density of 0.919 g/cm³ with 0.9 % by weight of maleic anhydride was used in place of the modified ethylene·4-methyl-1-pentene copolymer (A1) in Example 1. The measurement results of the properties of the obtained modified ethylene polymer composition and adhesive force between the adhesive resin layer (A) and the layer (C) of saponification product of ethylene·vinyl acetate copolymer of the multilayer plastic container are shown in Table 1.

### Comparative Example 3

The procedure of Example 1 was repeated except that a modified ethylene polymer (A1) having properties shown in Table 1 and prepared by graft modifying an ethylene·4-methyl-1-pentene copolymer having a density of 0.922 g/cm³ with 0.9 % by weight of maleic anhydride was used in place of the modified ethylene·4-methyl-1-pentene copolymer (A1) in Example 1. The measurement results of the properties of the obtained modified ethylene polymer composition and adhesive force between the adhesive resin layer (A) and the layer (C) of saponification product of ethylene·vinyl acetate copolymer of the multilayer plastic container are shown in Table 1.

### Comparative Example 4

A modified ethylene polymer composition (MFR of 0.8 g/10 minutes, density of 0.938 g/cm³ and n-decane insoluble content of 33 % by weight) was obtained in the same manner as in Example 1 except that an ethylene·1-butene random copolymer (A2) consisting of 98.0 mol% of a polymer unit derived from ethylene and 2.0 mol% of 1-butene as a comonomer and having a density of 0.935 g/cm³ and a melt flow rate of 1.0 g/10 minutes was used in place of the unmodified ethylene·1-butene random copolymer (A2) in Example 1.

The measurement results of the properties of the obtained modified ethylene polymer composition and adhesive force between the adhesive resin layer (A) and the layer (C) of saponification product of ethylene·vinyl acetate copolymer of a multilayer plastic container which was molded in the same manner as in Example 1 except that the modified ethylene polymer composition was used are shown in Table 1.

### Comparative Example 5

A modified ethylene polymer composition (MFR of 1.6 g/10 minutes, density of 0.919 g/cm³ and n-decane insoluble content of less than 1 % by weight) was obtained in the same manner as in Example 1 except that an ethylene·4-methyl-1-pentene random copolymer (A2) consisting of 92.0 mol% of a polymer unit derived from ethylene and 8.0 mol% of 4-methyl-1-pentene as a comonomer and having a density of 0.910 g/cm³ and a melt flow rate of 2.0 g/10 minutes was used in place of the unmodified ethylene·1-butene random copolymer (A2) in Example 1.

The measurement results of the properties of the obtained modified ethylene polymer composition and adhesive force between the adhesive resin layer (A) and the layer (C) of saponification product of ethylene·vinyl acetate copolymer of a multilayer plastic container which was molded in the same manner as in Example 1 except that the modified ethylene polymer composition was used are shown in Table 1.

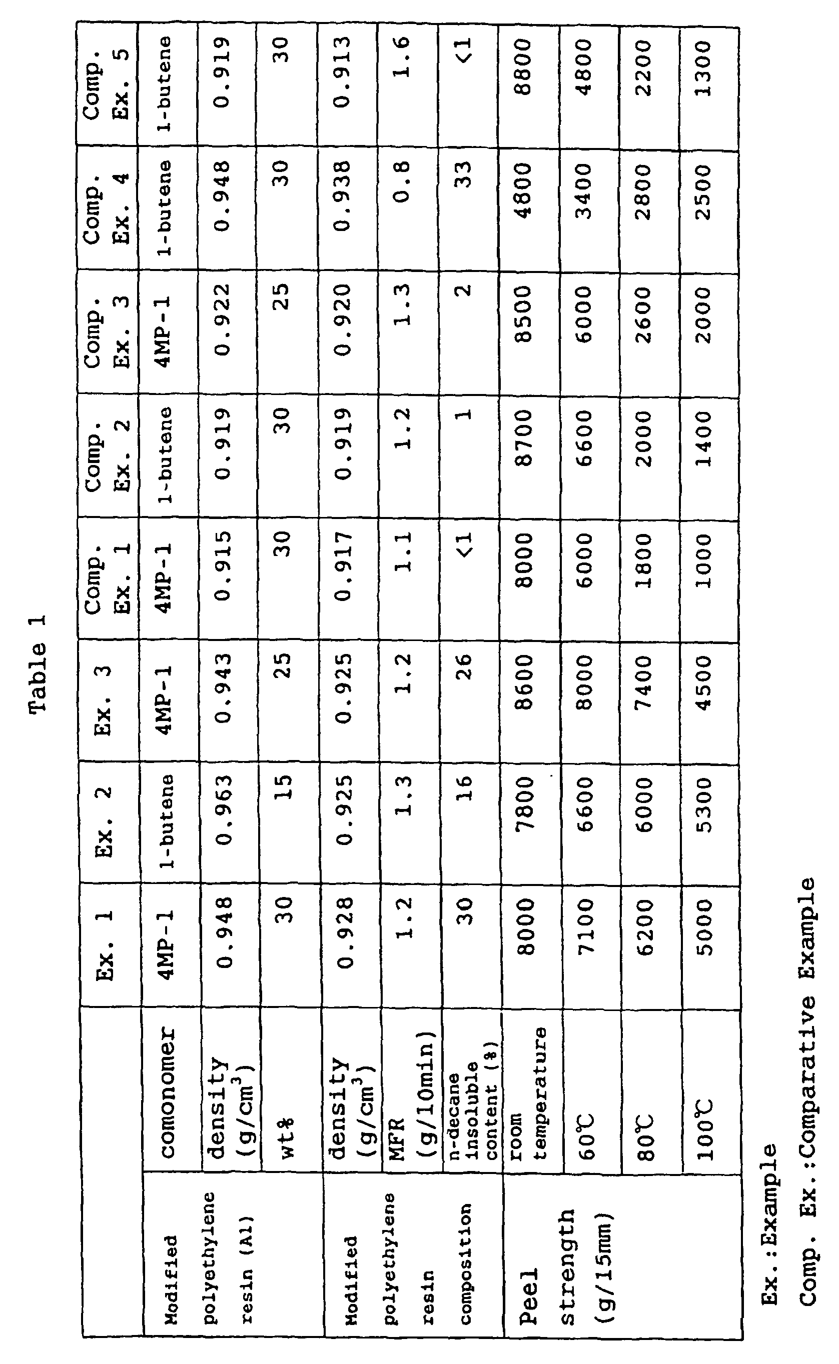

### Polyethylene resin (A2):

In Examples 1, 2 and 3 and Comparative Examples 1, 2 and 3, ethylene·1-butene copolymer (density of 0.920 g/cm³ and MFR of 1.5 g/10 minutes) comprising 96.0 mol% of a polymer unit derived from ethylene was used;

In Comparative Example 4, ethylene·1-butene copolymer (density of 0.935 g/cm³ and MFR of 1.0 g/10 minutes) comprising a polymer unit derived from ethylene is 98.0 mol% was used;

In Comparative Example 5, ethylene·4-methyl-1-pentene copolymer (density of 0.910 g.cm³ and MFR of 2.0 g/10 minutes) comprising a polymer unit derived from ethylene is 92.0 mol% was used.

In Table 1, 4MP-1 stands for 4-methyl-1-pentene.

According to the present invention, there is provided a multilayer plastic container which retains sufficient adhesive strength even when it contacts gasoline or gasohol, has excellent long-term durability and adhesive strength at high temperatures and is advantageously used as a fuel tank for automobiles.

## Claims

1. A multilayer plastic container which is produced by a co-extrusion blow molding method and formed of a laminate comprising at least a layer (B) of a polyethylene resin which is an ethylene homopolymer or a random copolymer of ethylene and α-olefin, the copolymer proportion rate of said α-olefin being 10 mole% or less, a layer (A) of a modified ethylene polymer composition and a layer (C) of a resin selected from the group consisting of saponification products of ethylene-vinyl acetate copolymer and polyamide resins in the mentioned order, the modified ethylene polymer composition of the layer (A) comprising a modified ethylene polymer (A1) graft modified with an unsaturated carboxylic acid or derivatives thereof and an unmodified ethylene polymer (A2) having a density of 0.915-0.935 g/cm³ and the modified ethylene polymer composition further having a melt flow rate, measured in accordance with ASTM D1238 (at 190°C under a load of 2,160 g), of 0.1 to 3.0 g/10 minutes, a density of 0.920 to 0.930 g/cm³ and an n-decane insoluble content of 2 to 40 % by weight at 90° C.

2. The multilayer plastic container of claim 1, wherein the polyethylene resin of the layer (B) is an ethylene homopolymer or a copolymer of ethylene and α-olefin having 3 to 10 carbon atoms.

3. The multilayer plastic container of claim 1 or 2, wherein the modified ethylene polymer composition of the layer (A) comprises 2 to 30 % by weight of a modified ethylene polymer (A1) graft modified with an unsaturated carboxylic acid or derivative thereof and having a density of 0.930 to 0.980 g/cm³ and 70 to 98 % by weight of an unmodified ethylene polymer (A2) having a density of 0.915 to 0.955 g/cm³.

4. The multilayer plastic container of any of claims 1 to 3, wherein the saponification product of the layer (C) is a polymer having a saponification degree of 90 to 100 % and obtained by saponifying an ethylene-vinyl acetate copolymer having an ethylene content of 15 to 70 mol%.

5. The multilayer plastic container of any of claims 1 to 3, wherein the polyamide resin of the layer (C) is selected from the group consisting of nylon 6, nylon 66, nylon 610, nylon 12, nylon 11, MXD nylon, amorphous nylon and nylon copolymer.

6. The multilayer plastic container of any of claims 1 to 5, wherein a layer is further present between the layer (B) and the layer (A).

7. The multilayer plastic container of claim 6, wherein the layer comprises a crushed material of a multilayer plastic container.

8. A fuel tank for automobiles which comprises the multilayer plastic container of any of claims 1 to 7.

9. Use of the multilayer plastic container of any of claims 1 to 7 as a fuel tank for automobiles.

## Patentansprüche

1. Mehrschicht-Plastikbehälter, der hergestellt ist durch ein Co-Extrusionsblasformverfahren und der gebildet ist aus einem Laminat, umfassend zumindest eine Schicht (B) eines Polyethylenharzes, welches ein Ethylen-Homopolymer oder ein statistisches Copolymer aus Ethylen und α-Olefin ist, wobei der Anteil an α-Olefin im Copolymer 10 mol% oder weniger beträgt, eine Schicht (A) einer modifizierten Ethylenpolymerzusammensetzung und eine Schicht (C) eines Harzes, das ausgewählt ist aus der Gruppe bestehend aus Verseifungsprodukten von EthylenVinylacetat-Copolymeren und Polyamidharzen, in der angegebenen Reihenfolge, wobei die modifizierte Ethylenpolymerzusammensetzung der Schicht (A) ein modifiziertes Ethylenpolymer (A1), das pfropfmodifiziert ist mit einer ungesättigten Carbonsäure oder Derivaten davon, und ein unmodifiziertes Ethylenpolymer (A2) mit einer Dichte von 0,915 bis 0,935 g/cm³ umfaßt, und wobei die modifizierte Ethylenpolymerzusammensetzung weiterhin eine Schmelzflußrate, gemessen gemäß ASTM D1238 (bei 190°C unter einer Last von 2.160 g), von 0,1 bis 3,0 g/10 Minuten, eine Dichte von 0,920 bis 0,930 g/cm³ und einen n-Decan unlöslichen Gehalt von 2 bis 40 Gew.% bei 90°C aufweist.

2. Mehrschicht-Plastikbehälter gemäß Anspruch 1, worin das Polyethylenharz der Schicht (B) ein Ethylen-Homopolymer oder ein Copolymer aus Ethylen und einem α-Olefin mit 3 bis 10 Kohlenstoffatomen ist.

3. Mehrschicht-Plastikbehälter gemäß Anspruch 1 oder 2, worin die modifizierte Ethylenpolymerzusammensetzung der Schicht (A) 2 bis 30 Gew.% eines modifizierten Ethylenpolymers (A1), das pfropfmodifiziert mit einer ungesättigten Carbonsäure oder einem Derivat davon ist und das eine Dichte von 0,930 bis 0,980 g/cm³ aufweist, und 70 bis 98 Gew.% eines unmodifizierten Ethylenpolymers (A2) mit einer Dichte von 0,915 bis 0,935 g/cm³ umfaßt.

4. Mehrschicht-Plastikbehälter gemäß irgendeinem der Ansprüche 1 bis 3, worin das Verseifungsprodukt der Schicht (C) ein Polymer mit einem Verseifungsgrad von 90 bis 100 %, erhalten durch Verseifung eines EthylenVinylacetat-Copolymers mit einem Ethylengehalt von 15 bis 70 mol%, ist.

5. Mehrschicht-Plastikbehälter gemäß irgendeinem der Ansprüche 1 bis 3, worin das Polyamidharz der Schicht (C) ausgewählt ist aus der Gruppe bestehend aus Nylon 6, Nylon 66, Nylon 610, Nylon 12, Nylon 11, MXD-Nylon, amorphem Nylon und Nylon-Copolymer.

6. Mehrschicht-Plastikbehälter gemäß irgendeinem der Ansprüche 1 bis 5, worin weiterhin eine Schicht vorliegt zwischen der Schicht (B) und der Schicht (A).

7. Mehrschicht-Plastikbehälter gemäß Anspruch 6, worin die Schicht ein zerstoßenes Material eines Mehrschicht-Plastikbehälters umfaßt.

8. Benzintank für Automobile, umfassend den Mehrschicht-Plastikbehälter nach irgendeinem der Ansprüche 1 bis 7.

9. Verwendung des Mehrschicht-Plastikbehälters nach irgendeinem der Ansprüche 1 bis 7 als Benzintank für Automobile.

## Revendications

1. Conteneur en plastique multicouche qui est produit par un procédé de moulage par co-extrusion soufflage et formé d'un stratifié comprenant au moins une couche (B) d'une résine de polyéthylène qui est un homopolymère d'éthylène ou un copolymère statistique d'éthylène et d'une α-oléfine, le taux proportionnel de ladite α-oléfine dans ledit copolymère étant de 10 % en mole ou moins, une couche (A) d'une composition de polymère d'éthylène modifié et une couche (C) d'une résine choisie dans le groupe constitué par les produits de saponification d'un copolymère éthylene - acétate de vinyle et les résines de polyamide dans l'ordre mentionné, la composition de polymère d'éthylène modifié de la couche (A) comprenant un polymère d'éthylène modifié (A1) modifié par greffe avec un acide carboxylique insaturé ou des dérivés de celui-ci et un polymère d'éthylène non modifié (A2) ayant une densité de 0,915 - 0,935 g/cm³ et la composition de polymère d'éthylène modifié ayant en outre un indice de fluidité, mesuré conformément à ASTM D1238 (à 190°C sous une charge de 2.160 g), de 0,1 à 3,0 g/10 minutes, une densité de 0,920 à 0,930 g/cm³ et une teneur en matières insolubles dans le n-décane de 2 à 40 % en poids à 90°C.

2. Conteneur en plastique multicouche de la revendication 1, dans lequel la résine de polyéthylène de la couche (B) est un homopolymère d'éthylène ou un copolymère d'éthylène et d'une α-oléfine ayant 3 à 10 atomes de carbone.

3. Conteneur en plastique multicouche de la revendication 1 ou 2, dans lequel la composition de polymère d'éthylène modifié de la couche (A) comprend 2 à 30 % en poids d'un polymère d'éthylène modifié (A1) modifié par greffe avec un acide carboxylique insaturé ou un dérivé de celui-ci et ayant une densité de 0,930 à 0,980 g/cm³ et 70 à 98 % en poids d'un polymère d'éthylène non modifié (A2) ayant une densité de 0,915 à 0,935 g/cm³.

4. Conteneur en plastique multicouche de l'une quelconque des revendications 1 à 3, dans lequel le produit de saponification de la couche (C) est un polymère ayant un degré de saponification de 90 à 100 % et obtenu par saponification d'un copolymère éthylène - acétate de vinyle ayant une teneur en éthylène de 15 à 70 % en mole.

5. Conteneur en plastique multicouche de l'une quelconque des revendications 1 à 3, dans lequel la résine de polyamide de la couche (C) est choisie dans le groupe constitué par le nylon 6, le nylon 66, le nylon 610, le nylon 12, le nylon 11, le nylon MXD, le nylon amorphe et un copolymère de nylon.

6. Conteneur en plastique multicouche de l'une quelconque des revendications 1 à 5, dans lequel une couche est en plus présente entre la couche (B) et la couche (A).

7. Conteneur en plastique multicouche de la revendication 6, dans lequel la couche comprend un matériau broyé d'un conteneur en plastique multicouche.

8. Réservoir de carburant pour des automobiles qui comprend le conteneur en plastique multicouche de l'une quelconque des revendications 1 à 7.

9. Utilisation du conteneur en plastique multicouche de l'une quelconque des revendications 1 à 7 en tant que réservoir de carburant pour des automobiles.
